# EUROPEAN PATENT SPECIFICATION

(11) **EP 1 535 782 B1**
(45) Date of publication and mention of the grant of the patent: **06.06.2007**
(21) Application number: 04257341.0
(22) Date of filing: 26.11.2004
(51) Int. Cl.: B60J 10/00, B60R 13/06, B32B 37/00, B29C 47/02

(54) **A flexible strip and a method of manufacturing same**
Flexible Profilleiste und Verfahren zu ihrer Herstellung
Profilé flexible et méthode de son production

(30) Priority: 03.09.2004 GB 0419638; 26.11.2003 GB 0327536
(43) Date of publication of application: 01.06.2005
(60) Divisional application: 06014186.8
(73) Proprietor: Coba Plastics Limited, Fleckney, Leicester LE8 8UR (GB)
(72) Inventor: Hammersley, Mark c/o Coba Plastics Ltd., Leicester LE8 8UR (GB); Jesson, Peter c/o Coba Plastics Ltd., Leicester LE8 8UR (GB)
(74) Representative: Setna, Rohan P.

(56) References cited:
- DE-A1- 3 835 211
- GB-A- 1 539 883
- GB-A- 2 095 315
- US-A- 3 222 769
- US-A- 4 676 856

## Description

The present application relates to a flexible strip. More particularly, the present application relates to a flexible edging strip or a flexible retainer strip. The application also relates to a method of manufacturing said flexible strips.

It is well known to provide flexible strips, such as edging strips or retaining strips (also known as retainers), on frame members to protect them from damage and/or to improve their appearance. A U-shaped channel is generally provided in the strip and the frame member, or an edge thereof, is located inside the channel to secure the strip in position. The sidewalls of the channel are generally biased towards each other so as to engage the frame member.

It is also known to use retainer strips to retain fabric in position, for example, on a car seat. The fabric is stitched or glued to the strip before locating the strip on a frame member.

However, there are limitations associated with known flexible strips of the above types. For example, the strip may have to be made from a highly flexible material so that it can conform to a complex three-dimensional shape, but the flexibility may be such that the strip does not properly engage the frame member on which it is mounted.

It is known to provide a flexible strip of plastics material with metal inserts along its length. The metal inserts have sufficient resilience to retain the strip in position but because there are spaces between each insert the flexibility of the plastics material is retained. However, these strips are more expensive than equivalent plastic strips and, moreover, they are generally more difficult to recycle because different materials are used in their construction. Such a flexible strip is known from US 3,222,769.

The Applicant's earlier UK patent No. 2250313 teaches forming a U-shaped edging strip from a stiffening core and a less rigid outer layer. The outer layer and the stiffening core are co-extruded so that they become integrally bonded to each other. The resilience of the stiffening core ensures that the edging strip may be fixedly secured in position. Although edging strips produced in accordance with the teaching of this patent are a marked improvement over strips formed from a single material, they may not be suitable for complex three dimensional shapes.

It is also known to provide a continuous plastics member with a plurality of openings in its side walls to create castellations along its length. These castellations allow the strip to conform more readily to complex three dimensional shapes whilst allowing a sufficiently resilient material to be used to ensure that the strip may be securely retained in place. However, the formation of castellations along the length of the edging strip means that it is more difficult to locate the strip on a frame member as each castellation is effectively a separate clip which must be located in position. Thus, the time taken to fit the edging strip may be increased. The strip may also be considered by some to be unattractive.

A further alternative is to produce a continuous strip from a plastics material and then to form the strip so as to comply with the three dimensional shape to which it is to be fitted, for example by applying heat. However, strips of this type are generally relatively expensive to produce because of the additional forming operations. The formed strip is also more susceptible to damage and may be more expensive to package because of its three dimensionally contoured shape.

US 4,676,856 discloses a flexible strip comprising a synthetic resin core member having a plurality of equally spaced apertures and an overlay which covers said apertures.

DE 3,835,211 discloses a flexible sealing strip comprising a hard rubber core member having a plurality of equally spaced apertures and a soft rubber coating.

The present invention at least in preferred embodiments attempts to ameliorate or overcome the problems outlined above in respect of known flexible strips.

Viewed from a first aspect, the present invention provides a flexible strip comprising a thermoplastic elongate member and an overlay, wherein a plurality of apertures or recesses are provided in said elongate member, and wherein the overlay at least partially covers said apertures or recesses, characterised in that the spacing between the apertures or recesses is varied along the length of the elongate member. The apertures or recesses form areas of increased flexibility and thereby increase the overall flexibility of the strip. The provision of an overlay helps to prevent obstructions entering into the apertures or recesses when the strip is being fitted and thereby allows the strip more readily to be fitted. The provision of a substantially continuous overlay may help to improve the appearance of the strip.

The apertures or recesses are preferably provided along a longitudinal axis of the elongate member to increase the flexibility of the strip along its length.

The spacing between apertures or recesses may be reduced in a region where increased flexibility is desired to tailor the strip for fixing to a specific component or frame member. Thus, the flexibility of a strip may be increased in a region which will extend around a portion of a frame member having a small radius of curvature and the flexibility reduced in a region which will extend around a portion of the frame member having a large radius of curvature.

The elongate member preferably comprises a first side wall and a second side wall. The first and second side walls are preferably arranged so as to be mountable on either side of a component. More preferably, the first and second side walls are biased towards each other so as to engage the sides of a component or frame member introduced between them and fixedly secure the strip in position.

The apertures or recesses may be formed in the first and/or second side walls. In arrangements where at least one aperture or recess is formed in each of the first and second side walls, the at least one aperture or recess in each wall may be aligned with or offset relative to each other.

The apertures or recesses in the first and/or second side wall(s) may be formed away from a free edge of the associated side wall so that each side wall has a substantially continuous edge. Alternatively, the apertures or recesses may extend to a free edge of the associated side wall. In arrangements where apertures are provided, the apertures may extend to the edge of the side wall to form one or more slots which define one or more castellations in the elongate member.

A flange may be integrally formed along a free edge of the or each side wall for reinforcement. In arrangements whereby one or more castellations are formed, the apertures may also extend through the flange.

A shoulder portion is preferably formed in the elongate member between the first and second side walls. The apertures or recesses may be formed wholly in the shoulder portion. Alternatively, the apertures or recesses may be formed partially in the shoulder portion and partially in the first and/or second side wall(s). The first side wall, second side walls and the shoulder portion preferably collectively define a U-shape or a J-shape in cross-section.

The flexibility of a strip having apertures provided therein is generally greatest when it is bent such that the apertures are provided on the outside of the bend. Thus, the strip may be tailored for a particular component or frame member by providing at least one aperture in at least one of the first sidewall, second sidewall and shoulder portion such that, when the strip is located on the component or frame member, at least one aperture is on the outside of each bend formed in the component or frame member.

The overlay is preferably made from a thermoplastic material. The elongate member may, for example, be made of polypropylene or polyethylene. The overlay may be made from any suitable thermoplastic elastomer and most preferably is made of a thermoplastic rubber. Most preferably, the elongate member is formed by an extrusion process from one or more materials.

The overlay most preferably forms a continuous layer which extends completely over the apertures. The overlay is preferably an elastic material. Although the overlay may extend into the apertures or recesses, it preferably does not fill the apertures or recesses. A material may be provided in the apertures or recesses substantially to fill them; the overlay being provided over said material. The overlay is preferably bonded to the elongate member.

The overlay is preferably co-extruded over the elongate member after the apertures or recesses have been formed therein.

Rather than extruding the overlay, it may be a tape or other sheet material. Preferably, the tape or sheet material is adhesively attached to the elongate member. To improve further the appearance of the edging strip, the overlay may be provided with a flocked outer surface.

The present application also relates to a flexible strip as described herein having a fabric attached thereto. The fabric may, for example, form part of the upholstery of a car seat. The fabric may be adhesively attached to the flexible strip or it may be bonded, for example by thermal bonding. Alternatively, the fabric may be attached using mechanical means, such as stitching, staples or other fasteners. The flexible strip preferably comprises a flexible portion to which the fabric may be attached.

The flexible strip may be an edging strip or a retaining strip.

The flexible strips, described herein may in preferred embodiments further comprise at least one sealing member. In such embodiments the flexible strips may be used, for example, on car doors to create a seal when the door is shut. The sealing member may be made from a foamed or a non-foamed plastics material. The sealing member preferably has an O-shape. The sealing member is preferably formed integrally with the flexible strip and/or overlay, for example by co-extrusion. It will, however, be understood that the sealing member may be formed from a different material from the one used to form the overlay.

The flexible strips described herein may further comprise at least one retaining member to help retain the flexible strips in situ. The retaining member(s) is/are preferably formed from a flexible material to allow the flexible strip more readily to be located in position, for example on a frame member. The retaining member is preferably formed integrally with the elongate member and/or flexible strip, for example by co-extrusion. It will, however, be understood that the retaining member may be made from a different material from that of the elongate member.

Viewed from a further aspect, the present invention relates to a method for forming a flexible strip, the method comprising the following steps: (a) forming a thermoplastic elongate member having a plurality of apertures or recesses provided therein; and (b) providing an overlay onto said elongate member at least partially to cover said apertures or recesses, characterised by the spacing between the apertures or recesses being varied along the length of the elongate member.

Although the elongate member may be formed by injecting moulding, it is preferably formed by extruding a continuous section.

The elongate member may initially be generally planar and the apertures or recesses formed therein. The planar strip may subsequently be formed into the desired shape (e.g. with a U-shaped or J-shaped cross-section) by applying heat. This production process has the advantage that the elongate member may readily be supported when the apertures or recesses are formed. Preferably,however, the elongate member is formed with substantially its final cross-section to reduce the number of process steps.

The apertures or recesses may then be formed in the extruded elongate member by a machining process such as cutting, drilling or milling. Preferably, however, said apertures or recesses are formed by a punching process. The elongate member is preferably extruded from a thermoplastics material and the extrudate is supplied to the punching apparatus as a continuous section. The punching process may be performed while the extrudate is hot and in a malleable state.

The punching apparatus preferably moves in an axial direction at the same speed as the extrudate is extruded so as to allow the extruding process to continue uninterrupted. A die is preferably provided on one side of the extrudate, or in a channel defined therein, and a punch is then displaced relative to the die to punch the apertures or recesses in the elongate member. More than one punch and/or die may be used.

The overlay may be applied as a tape or sheet member onto the elongate member at least partially to cover said apertures or recesses. The tape or sheet member may be adhesively attached to the elongate member.

Preferably the elongate member is supplied to extrusion apparatus after the apertures or recesses have been formed therein. The extrusion apparatus preferably applies the overlay at least substantially to cover the apertures or recesses. The overlay preferably does not fill the apertures or recesses but rather extends over them so as to form a continuous surface. This production technique is particularly desirable as it allows the flexibility of the elongate member to be maintained whilst also reducing the likelihood of components entering into the apertures or recesses.

The overlay preferably bonds to the elongate member when it is applied. Heat may be applied to form the bond between the overlay and elongate member.

A material may be introduced into the apertures or recesses substantially to fill them and prevent the overlay subsequently entering into the apertures or recesses.

The present application also discloses a method for forming a flexible edging strip as described herein comprising the steps of:
(a) forming an elongate member having at least one region of increased flexibility provided therein; and
(b) applying an overlay onto said elongate member at least substantially to cover said at least one region of increased flexibility.

The method of forming an elongate member having at least one aperture formed therein, as described herein, is considered to be patentable in its own right. Therefore, The present application relates to a method of forming an elongate member having at least one aperture formed therein, the method comprising the steps of:
(a) extruding the elongate member; and
(b) using a punch to punch the at least one aperture in said elongate member, wherein the punch is moved in an axial direction along with the elongate member as the elongate member is extruded.

The elongate material may be cut to the desired length of the same time as said at least one aperture is punched therein.

Preferred embodiments of the present invention will now be described, by way of example only, and with reference to the accompanying figures, in which:
Figure 1 shows an end view of a first embodiment of a flexible strip in accordance with the present invention;
Figure 2 shows a side view of an elongate member in accordance with the first embodiment of the present invention;
Figure 3 shows a front perspective view of the flexible strip according to the first embodiment of the present invention;
Figure 4 shows a rear perspective view of the flexible strip according to the first embodiment of the present invention;
Figure 5 shows a perspective view of a flexible strip according to a second embodiment of the present invention;
Figure 6 shows an end view of a third embodiment of a flexible strip in accordance with the present invention;
Figure 7 shows an end view of a fourth embodiment of a flexible strip in accordance with the present invention; and
Figures 8 and 9 show alternative arrangements of a flexible sealing strip in accordance with a fifth embodiment of the present invention.

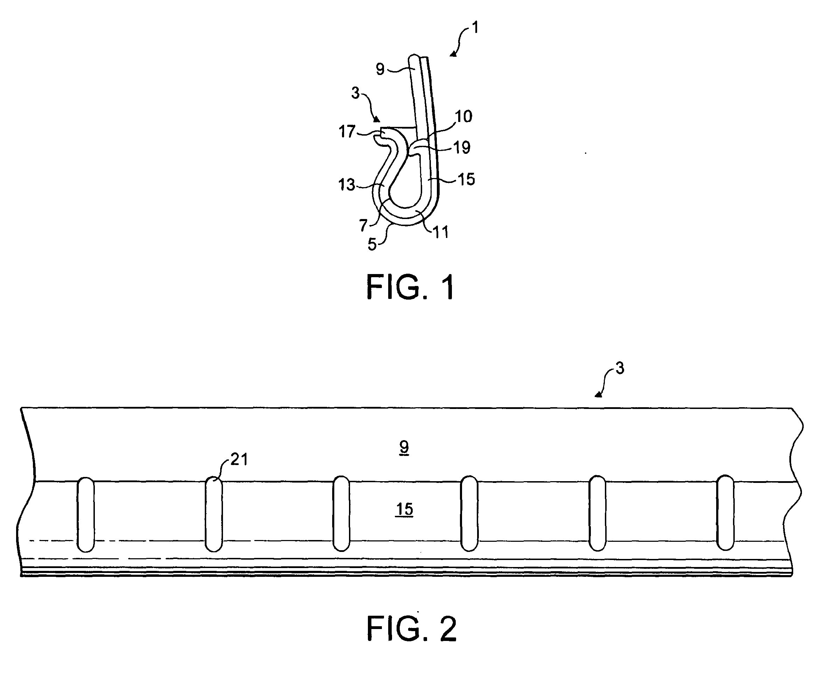

A retaining strip 1 in accordance with a first embodiment of the present invention is shown in Figures 1 and 2. The retaining strip 1 is to be employed to retain fabric in position on a car seat.

The retaining strip 1 comprises an elongate member 3 and an overlay 5. The elongate member 3 is generally J-shaped in cross-section and is made up of a U-shaped portion 7 and a strip member 9. The U-shaped portion 7 and strip member 9 are formed from different thermoplastic materials which are co-extruded so as to bond together along a common surface 10. The U-shaped portion 7 and the strip member 9 may, for example, be formed from polypropylene or polyethylene.

The U-shaped portion 7 comprises a shoulder portion 11 and first and second side walls 13, 15. An outwardly projecting flange 17 is integrally formed along a free edge 18 of the first sidewall 13. An inwardly projecting flange 19 is formed on the inside of the second side wall 15.

The strip member 9 of the elongate member 3 is formed from a flexible thermoplastics material to which fabric may readily be stitched. The U-shaped portion 7 is made from a more rigid thermoplastics material and the first and second side walls 13, 15 are biased towards each other so that the retaining strip 1 may be clipped onto a frame member (not shown) of the car seat.

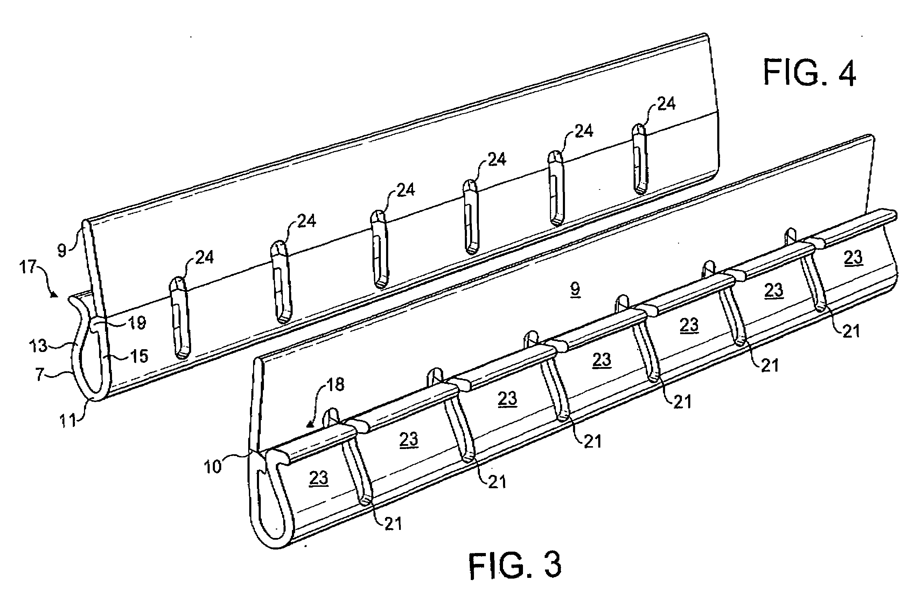

A first row of apertures 21 is formed along the length of the first side wall 13. The first row of apertures 21 extend through the flange portion 17 to the free edge 18 of the first side wall 13. Thus, the first row of apertures 21 form slots in the first side wall 13 and a series of castellations 23 are defined therebetween, as shown in Figure 3.

A second row of apertures 24 is formed in the second side wall 15 and the strip member 9, as shown in Figures 2 and 4. The second row of apertures 24 extend only partially across the strip member 9.

The overlay 5 is provided over the outside of the U-shaped portion 7 and the attachment strip 9 of the elongate member 3. The overlay 5 does not fill the apertures 21 in the elongate member 3 but rather it covers them to form a continuous outer skin. This ensures that the overlay 5 does not unduly reduce the flexibility of the retaining strip 1. The overlay 5 is preferably made of a thermoplastic rubber and is preferably 0.5mm thick.

In use, a fabric or cover (not shown) forming part of the upholstery for a car seat is stitched to the strip member 9 of the retaining strip 1. The U-shaped portion 7 of the elongate member 3 may then be clipped over a frame member provided in the car seat so as to retain the upholstery in position. The first and second side walls 13, 15 of the U-shaped portion 7 are biased against the surface of the frame member to ensure that the retaining strip 1 is retained in position. The inwardly projecting flange 19 contacts the surface of the frame member to assist in retaining the edging strip fixedly in position.

The provision of apertures 21 in the elongate member 3 increases the flexibility of the retaining strip 1. Consequently, the edging strip can more readily conform to complex three dimensionally contoured shapes.

The overlay 5 is formed from an elastic material which is different to those used to form the elongate member 3. The overlay may be a different colour so that the retaining strip better matches the fabric to which it is to be attached. Equally, the material used for the overlay 5 may provide a surface which provides a more appealing tactile and/or visual finish.

A process for manufacturing the retaining strip 1 in accordance with the first embodiment of the present invention will now be described. The U-shaped portion 7 and the strip member 9 of the elongate member 3 are co-extruded from a thermoplastics material. The extrudate is passed through a water bath to cool it.

The elongate member is then passed to a punching station. The punching station comprises a die which is inserted into the middle of the U-shaped portion 7 to support the first and second side walls 13, 15. A punch is then displaced relative to the elongate member 3 to punch the apertures 21 into the elongate member 3. The punch and die move in an axial direction together with the extrudate so as to minimise the relative displacement between the punching apparatus and the extrudate. Thus, the punching apparatus does not interfere with the operation of the extruding apparatus.

After the apertures 21 have been punched into the elongate member 3, the elongate member is introduced into a second extruding apparatus so as to extrude the overlay 5 onto the outer surface thereof. If necessary, the retaining strip 1 may then be introduced into a second water bath to cool the overlay 5.

Finally, the retaining strip 1 is supplied to a cutting station where it is cut to the desired length.

It will be appreciated that the apertures 21, 24 need not be evenly spaced along the length of the retaining strip 1. Rather, the spacing between the apertures 21, 24 may be varied along the length of the retaining strip 1 so that it is tailored for a particular application (e.g. the spacing between the apertures 21, 24 may be reduced in a region where additional flexibility of the retaining strip 1 is required).

As an alternative to providing an aperture 21, 24 extending completely through the first and/or second sidewalls of elongate member 3, the thickness of the first and/or second sidewalls 13, 15 may be reduced in localised areas to form a series of recesses (not shown). A punch may be used to remove a portion of the first and/or second sidewalls 13, 15 to form said recesses. Indeed, any means for forming regions of increased flexibility in the elongate member 3 are suitable.

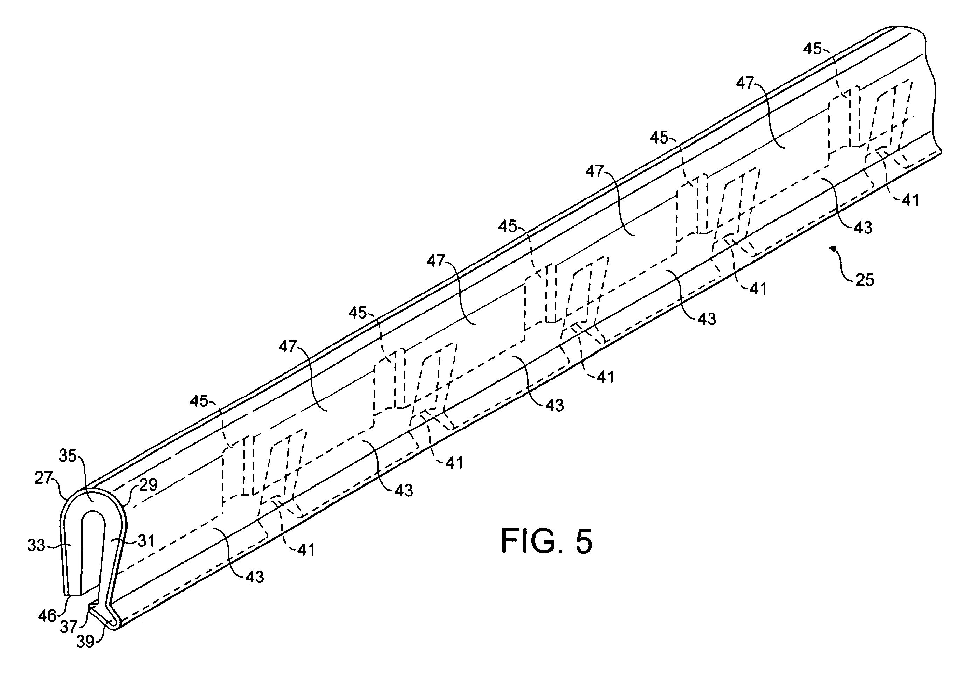

An edging strip 25 in accordance with a second embodiment of the present invention is shown in Figure 5. The edging strip 25 comprises an elongate member 27 and an overlay 29.

The elongate member 27 is made up of first and second side walls 31, 33 and a shoulder portion 35, and is generally U-shaped in cross-section. An inwardly projecting flange 37 is provided on the first side wall 31 for securing the edging strip 25 in position. An outwardly projecting flange 39 is also provided on the first wall 31 for reinforcing the edging strip 25.

A first row of apertures 41 is provided in the first side wall 31 of the elongate member 27. The first row of apertures 41 extend through the inwardly and outwardly projecting flanges 37, 39 to a free edge 42 of the first side wall 31 so as to define a first series of castellations 43 along the length of the elongate member 27.

A second row of apertures 45 is provided in the second side wall 33. The second row of apertures 45 extend to a free edge 46 of the second side wall 33 to define a second series of castellations 47 along the length of the elongate member 27.

The overlay 29 is provided over the first and second rows of apertures 41, 45 to form a continuous outer skin. The overlay 29 is preferably 0.5mm in thickness.

The manufacture of the edging strip 25 is generally the same as the manufacture of the retaining strip 1 described herein. However, it will be appreciated that the elongate member 27 is not co-extruded as it is formed from a single material.

The edging strip 25 may be provided over the edge of a sheet member (not shown) to improve its appearance and/or to protect it from damage. Equally, the edging strip 25 may be provided over a frame member (not shown). If required, a fabric or other sheet material could be attached to the edging strip 25, for example, using adhesive.

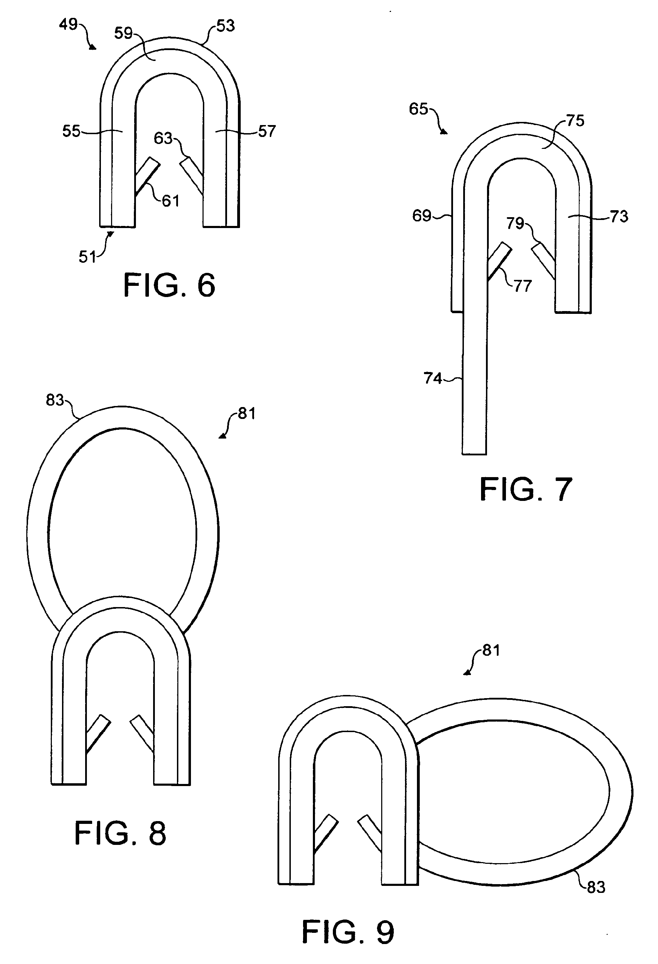

Figure 6 shows an edging strip 49 in accordance with a third embodiment of the present invention. The edging strip 49 comprises an elongate member 51 and an overlay 53.

The elongate member 51 is generally U-shaped in cross-section and comprises first and second sidewalls 55, 57 and a shoulder portion 59. A series of apertures (not shown) is formed along the length of the elongate member 51 to increase the flexibility of the edging strip 49.

The edging strip 49 further comprises first and second inwardly projecting members 61, 63. The inwardly projecting members 61, 63 are formed from a flexible material to allow the edging strip 49 more readily to be located in position. The inwardly projecting members 61, 63 are preferably co-extruded with the elongate member 51. The flexibility of the inwardly projecting members 61, 63 allow the edging strip 49 more readily to be located in position, for example on a frame member, and may advantageously increase the retention force applied by the edging strip 49.

The elongate member 51 and the inwardly projecting members 61, 63 are made of polypropylene. The edging strip 49 is formed employing the same process as described above for producing the first embodiment of the present invention.

A retaining strip 65 in accordance with a fourth embodiment of the present invention is shown in Figure 7. The retaining strip 65 is generally J-shaped in cross-section and comprises an elongate member 67 and an overlay 69. The elongate member 67 is generally J-shaped in cross-section and comprises a first sidewall 71, a second sidewall 73 and a shoulder portion 75. The first sidewall 71 of the elongate member 67 is longer than the second sidewall 73 to define the aforementioned J-shape. The overlay 69 extends over a U-shaped outer portion of the elongate member 67 (i.e. the overlay 69 does not extend over the complete outer surface of the elongate member 67). A series of apertures (not shown) are provided over the length of the elongate member 67.

The retaining strip 65 further comprises first and second inwardly projecting members 77, 79. The inwardly projecting members 77, 79 are co-extruded with the elongate member 67 and perform the same function as the corresponding members in the third embodiment described above. The elongate member 67 and the inwardly projecting members 77, 79 are preferably co-extruded from polypropylene.

It will be appreciated that the flexibility and colour of the overlay 69 may be varied for different applications.

A sealing strip 81 in accordance with a fifth embodiment of the present invention is shown in Figure 8. The sealing strip 81 comprises an edging strip corresponding generally to the edging strip 49 of the third embodiment of the present invention described above. Again, a series of apertures (not shown) are provided along the length of the sealing strip 81. However, the sealing strip 81 further comprises a sealing member 83 which is generally O-shaped in cross-section.

The sealing member 83 is co-extruded with the edging strip 49 so as to form a bond with the overlay 53. The sealing member 83 may be formed from a foamed or non-foamed plastics material. Although desirable, it is not essential that the sealing member 83 has a hollow interior.

An alternative arrangement of the sealing strip 81 is shown in Figure 91. Like reference numerals have again been used for like components. This alternative arrangement of the sealing strip 81 differs only insofar as the sealing member 83 is provided to one side of the edging strip 49.

It will be appreciated that the different arrangements of the sealing arrangement 81 as shown in Figures 8 and 9 may be used, for example, to form a seal between a car door and an associated frame member. However, the sealing strip 81 is not intended to be limited to applications of this type.

Although the first embodiment of the retaining strip described herein is directed to a particular application for attaching a fabric to a car seat, it will be appreciated that alternative applications for the flexible strips described herein are also envisaged. For example, the flexible strips could simply provide a protective and/or decorative edge to a component or frame member.

A strip may also be extruded (or co-extruded) with an integrally formed sealing member (having, for example, an O-shaped cross-section). The resulting strip could, for example, be used to form a seal between a door and an associated frame member. It is envisaged that strips of this type would be suitable for a number of applications in the automotive industry.

## Claims

1. A flexible strip (1) comprising a thermoplastic elongate member (3) and an overlay (5), wherein a plurality of apertures or recesses (21) are provided in said elongate member (3), and wherein the overlay (5) at least partially covers said apertures or recesses (21),
**characterised in that** the spacing between the apertures or recesses (21) is varied along the length of the elongate member (3).

2. A flexible strip (1) as claimed in claim 1, wherein the flexible strip (1) is an edging strip or a retainer.

3. A flexible strip (1) as claimed in claim 1 or 2, wherein the elongate member (3) comprises a first sidewall (13) and a second sidewall (15).

4. A flexible strip (1) as claimed in claim 3, wherein the apertures or recesses (21) are provided in the first sidewall (13).

5. A flexible strip (1) as claimed in claim 3 or 4, wherein the apertures or recesses (24) are provided in the second sidewall (15).

6. A flexible strip (1) as claimed in claim 3, wherein at least one of the apertures or recesses (21, 24) is provided in each of said first (13) and second (15) sidewalls and the or each aperture or recess (21) in the first sidewall (13) is offset from the or each aperture or recess (24) in the second sidewall (15).

7. A flexible strip (1) as claimed in any one of claims 3 to 6, wherein the elongate member (3) further comprises a flange on a free edge (18) of said first and/or second sidewall (s) (13, 15).

8. A flexible strip (1) as claimed in any one of claims 4 to 7, wherein the apertures (21) form one or more castellations in the associated sidewall(s) (13, 15).

9. A flexible strip (1) as claimed in any one of claims 3 to 8, wherein the elongate member (3) further comprises a shoulder portion (11) between said first (13) and second (15) sidewalls.

10. A flexible strip (1) as claimed in claim 9, wherein at least a portion of the apertures or recesses (21) are formed in the shoulder portion (11) of the elongate member (3).

11. A flexible strip (1) as claimed in claim 10, wherein the apertures or recesses (21) extend substantially across said shoulder portion (11).

12. A flexible strip (1) as claimed in claim 9, 10 or 11, wherein the first sidewall (13), the second sidewall (15) and the shoulder portion (11) define a U-shape or a J-shape in cross-section.

13. A flexible strip (1) as claimed in any preceding claim, wherein the overlay (5) is a thermoplastic material.

14. A flexible strip (1) as claimed in any preceding claim, wherein the elongate member (3) is formed by an extrusion process.

15. A flexible strip (1) as claimed in any preceding claim wherein the overlay (5) is extruded over said elongate member (3).

16. A flexible strip (1) as claimed in any one of claims 1 to 14, wherein the overlay (5) is a tape or a sheet material.

17. A flexible strip (1) as claimed in claim 16, wherein the overlay (5) has a flocked outer surface.

18. A flexible strip (1) as claimed in any preceding claim, wherein the spacing between the apertures or recesses (21) is reduced in a longitudinal section of the elongate member (3) to provide increased flexibility along that section.

19. A flexible strip (1) as claimed in any preceding claim, wherein the elongate member (3) comprises a plurality of apertures or recesses (21) of substantially uniform size.

20. A flexible strip (1) as claimed in any one of claims to 18, wherein the elongate member (3) comprises a plurality of apertures or recesses (21), the size of the apertures or recesses (21) increasing in a longitudinal section of the elongate member (3) to provide increased flexibility along that section.

21. A flexible strip (1) as claimed in any one of the preceding claims further comprising at least one sealing member (83).

22. A flexible strip (1) as claimed in claim 21, wherein the or each sealing member (83) has an O-shaped cross-section.

23. A flexible strip (1) as claimed in claim 21 or 22 wherein the sealing member (83) is integrally formed with the overlay (5).

24. A flexible strip (1) as claimed in any preceding claim having a fabric or covering attached thereto.

25. A flexible strip (1) as claimed in claim 24 wherein the fabric or covering is part of a car seat upholstery.

26. A flexible strip (1) as claimed in any preceding claims further comprising at least one retaining member (61).

27. A flexible strip (1) as claimed in claim 26, wherein the or each retaining member (61) is formed from a flexible material.

28. A flexible strip (1) as claimed in claim 26 or 27, wherein the retaining member (61) is integrally formed with the elongate member (3).

29. A method for forming a flexible strip (1) as claimed in any one of claims 1 to 28, the method comprising the following steps:
(a) forming a thermoplastic elongate member (3) having a plurality of apertures or recesses (21) provided therein; and
(b) providing an overlay (5) onto said elongate member (3) at least partially to cover said apertures or recesses (21),
**characterised by** the spacing between the apertures or recesses (21) being varied along the length of the elongate member (3).

30. A method as claimed in claim 29, wherein the elongate member (3) is formed by an extrusion process.

31. A method as claimed in claim 29 or 30, wherein said apertures or recesses (21) are formed in the elongate member (3) by a punch in a punching process.

32. A method as claimed in claim 31, wherein said punch is displaced in an axial direction together with the elongate member (3) during said punching process.

33. A method as claimed in claim 31 or 32, wherein at least a portion of said elongate member (3) is supported by a die during said punching process.

34. A method as claimed in claim 33, wherein said die is displaced in an axial direction together with the elongate member (3) during said punching process.

35. A method as claimed in claim 33, wherein said elongate member (3) is formed with a first sidewall (13) and a second sidewall (15), and said die is provided between said first (13) and second (15) sidewalls during said punching process.

36. A method as claimed in any one of claims 29 to 34, wherein said elongate member (3) is formed with a first sidewall (13) forming portion and a second sidewall (15) forming portion and said method further comprises displacing said first and second sidewall forming portions relative to each other after said apertures or recesses (21) have been formed in the elongate member (3).

37. A method as claimed in claim 36 further comprising the step of applying heat to said elongate member (3) and displacing the first (13) and second (15) sidewall forming portions relative to each other.

38. A method as claimed in any one of claims 29 to 37, wherein said overlay (5) is provided by an extrusion process.

39. A method as claimed in any one of claims 29 to 38 further comprising the step of forming at least one retaining member (61) and/or at least one sealing member (83).

40. A method as claimed in claim 39, wherein the at least one retaining member (61) and/or the at least one sealing member (83) are/is integrally formed with the flexible strip (1).

41. A method as claimed in claim 40, wherein the at least one retaining member (61) and/or the at least one sealing member (83) are/is co-extruded with the overlay (5).

## Patentansprüche

1. Flexible Profilleiste (1), umfassend ein thermoplastisches längliches Glied (3) und einen Überzug (5), wobei eine Vielzahl von Öffnungen oder Ausnehmungen (21) in dem länglichen Glied (3) vorgesehen sind, und wobei der Überzug (5) zumindest teilweise die Öffnungen oder Ausnehmungen (21) bedeckt,
**dadurch gekennzeichnet, dass** der Abstand zwischen den Öffnungen oder Ausnehmungen (21) entlang der Länge des länglichen Glieds (3) variiert.

2. Flexible Profilleiste (1) nach Anspruch 1, wobei die flexible Profilleiste eine Kantenleiste oder eine Halteleiste ist.

3. Flexible Profilleiste (1) nach Anspruch 1 oder 2, wobei das längliche Glied (3) eine erste Seitenwand (13) und eine zweite Seitenwand (15) umfasst.

4. Flexible Profilleiste (1) nach Anspruch 3, wobei die Öffnungen oder Ausnehmungen (21) in der ersten Seitenwand (13) vorgesehen sind.

5. Flexible Profilleiste (1) nach Anspruch 3 oder 4, wobei die Öffnungen oder Ausnehmungen (24) in der zweiten Seitenwand (15) vorgesehen sind.

6. Flexible Profilleiste (1) nach Anspruch 3, wobei zumindest eine der Öffnungen oder Ausnehmungen (21, 24) sowohl in der ersten (13) als auch in der zweiten (15) Seitenwand vorgesehen ist und jede Öffnung oder Ausnehmung (21) in der ersten Seitenwand (13) versetzt ist gegenüber jeder Öffnung oder Ausnehmung (24) in der zweiten Seitenwand (15).

7. Flexible Profilleiste (1) nach einem der Ansprüche 3 bis 6, wobei das längliche Glied (3) ferner einen Flansch an einer freien Kante (18) der ersten und/oder der zweiten Seitenwand (13, 15) umfasst.

8. Flexible Profilleiste (1) nach einem der Ansprüche 4 bis 7, wobei die Öffnungen (21) eine oder mehrere Kronierungen in der/den verbundenen Seitenwand/-wänden (13, 15) bilden.

9. Flexible Profilleiste (1) nach einem der Ansprüche 3 bis 8, wobei das längliche Glied (3) ferner einen Schulterbereich (11) zwischen der ersten (13) und zweiten (15) Seitenwand umfasst.

10. Flexible Profilleiste (1) nach Anspruch 9, wobei zumindest ein Teil der Öffnungen oder Ausnehmungen (21) in dem Schulterbereich (11) des länglichen Glieds (3) geformt ist.

11. Flexible Profilleiste (1) nach Anspruch 10, wobei die Öffnungen oder Ausnehmungen (21) sich im Wesentlichen durch den Schulterbereich (11) erstrecken.

12. Flexible Profilleiste (1) nach Anspruch 9, 10 oder 11, wobei die erste Seitenwand (13), die zweite Seitenwand (15) und der Schulterbereich (11) im Querschnitt eine U-Form oder eine J-Form bilden.

13. Flexible Profilleiste (1) nach einem der vorhergehenden Ansprüche, wobei der Überzug (5) ein thermoplastisches Material ist.

14. Flexible Profilleiste (1) nach einem der vorhergehenden Ansprüche, wobei das längliche Glied (3) durch ein Extrusionsverfahren geformt wird.

15. Flexible Profilleiste (1) nach einem der vorhergehenden Ansprüche, wobei der Überzug (5) über das längliche Glied (3) extrudiert ist.

16. Flexible Profilleiste (1) nach einem der Ansprüche 1 bis 14, wobei der Überzug (5) ein Band- oder Blattmaterial ist.

17. Flexible Profilleiste (1) nach Anspruch 16, wobei der Überzug (5) eine beflockte Außenfläche aufweist.

18. Flexible Profilleiste (1) nach einem der vorhergehenden Ansprüche, wobei der Abstand zwischen den Öffnungen oder Ausnehmungen (21) in einem longitudinalen Abschnitt des länglichen Gliedes (3) verringert ist, um eine gesteigerte Flexibilität entlang dieses Abschnitts vorzusehen.

19. Flexible Profilleiste (1) nach einem der vorhergehenden Ansprüche, wobei das längliche Glied (3) eine Vielzahl von Öffnungen oder Ausnehmungen (21) von im Wesentlichen einheitlicher Größe umfasst.

20. Flexible Profilleiste (1) nach einem der Ansprüche 1 bis 18, wobei das längliche Glied (3) eine Vielzahl von Öffnungen oder Ausnehmungen (21) umfasst, wobei die Größe der Öffnungen oder Ausnehmungen (21) in einem longitudinalen Abschnitt des länglichen Gliedes (3) anwächst, um entlang dieses Bereiches eine gesteigerte Flexibilität bereit zu stellen.

21. Flexible Profilleiste (1) nach einem der vorhergehenden Ansprüche, ferner umfassend zumindest ein Abdichtelement (83).

22. Flexible Profilleiste (1) nach Anspruch 21, wobei dieses oder jedes Abdichtelement (83) einen O-förmigen Querschnitt aufweist.

23. Flexible Profilleiste (1) nach Anspruch 21 oder 22, wobei das Abdichtelement (83) einstückig mit der Auflage (5) gebildet ist.

24. Flexible Profilleiste (1) nach einem der vorhergehenden Ansprüche, wobei ein Gewebe oder eine Abdeckung damit verbunden ist.

25. Flexible Profilleiste (1) nach Anspruch 24, wobei das Gewebe oder die Abdeckung ein Teil einer Autositzpolsterung ist.

26. Flexible Profilleiste (1) nach einem der vorhergehenden Ansprüche, ferner umfassend zumindest ein Rückhalteglied (61).

27. Flexible Profilleiste (1) nach Anspruch 26, wobei dieses oder jedes Rückhalteglied (61) aus einem flexiblen Material gebildet ist.

28. Flexible Profilleiste (1) nach Anspruch 26 oder 27, wobei das Rückhalteglied (61) einstückig mit dem länglichen Glied (3) gebildet ist.

29. Verfahren zur Herstellung einer flexiblen Profilleiste (1) nach einem der Ansprüche 1 bis 28, wobei das Verfahren die folgenden Schritte umfasst:
(a) Herstellen eines thermoplastischen länglichen Gliedes (3) mit einer Vielzahl von darin vorgesehenen Öffnungen oder Ausnehmungen (21); und
(b) Bereitstellen eines Überzugs (5) auf dem länglichen Glied (3), um die Öffnungen oder Ausnehmungen (21) zumindest teilweise abzudecken,
**dadurch gekennzeichnet, dass** die Abstände zwischen den Öffnungen oder Ausnehmungen (21) entlang der Länge des länglichen Gliedes (3) variiert werden.

30. Verfahren nach Anspruch 29, wobei das längliche Glied (3) durch ein Extrusionsverfahren hergestellt wird.

31. Verfahren nach Anspruch 29 oder 30, wobei die Öffnungen oder Ausnehmungen (21) in dem länglichen Glied (3) durch einen Dorn in einem Stanzverfahren hergestellt werden.

32. Verfahren nach Anspruch 31, wobei der Dorn zusammen mit dem länglichen Glied (3) während des Stanzverfahrens in axialer Richtung versetzt wird.

33. Verfahren nach Anspruch 31 oder 32, wobei zumindest ein Bereich des länglichen Gliedes (3) während des Stanzverfahrens von einer Matrize gestützt wird.

34. Verfahren nach Anspruch 33, wobei die Matrize zusammen mit dem länglichen Glied (3) während des Stanzverfahrens in axialer Richtung versetzt wird.

35. Verfahren nach Anspruch 33, wobei das längliche Glied (3) mit einer ersten Seitenwand (13) und einer zweiten Seitenwand (15) hergestellt wird, und wobei die Matrize während des Stanzverfahrens zwischen der ersten (13) und der zweiten (15) Seitenwand bereitgestellt wird.

36. Verfahren nach einem der Ansprüche 29 bis 34, wobei das längliche Glied (3) mit einem die erste Seitenwand (13) bildenden Abschnitt und einem die zweite Seitenwand (15) bildenden Abschnitt hergestellt wird, und wobei das Verfahren ferner das Verlagern der die erste und die zweite Seitenwand bildenden Abschnitte relativ zueinander umfasst, nachdem die Öffnungen oder Ausnehmungen (21) in dem länglichen Glied (3) gebildet worden sind.

37. Verfahren nach Anspruch 36, ferner umfassend den Schritt zum Erhitzen des länglichen Glieds (3) und Verlagern der die ersten (13) und die zweiten (15) Seitenwände bildenden Abschnitte relativ zueinander.

38. Verfahren nach einem der Ansprüche 29 bis 37, wobei der Überzug (5) durch ein Extrusionsverfahren bereitgestellt wird.

39. Verfahren nach einem der Ansprüche 29 bis 38, ferner umfassend den Schritt des Herstellens von zumindest einem Rückhalteglied (61) und/oder zumindest einem Abdichtelement (83).

40. Verfahren nach Anspruch 39, wobei das zumindest eine Rückhalteglied (61) und/oder das zumindest eine Abdichtelement (83) einstückig mit der flexiblen Profilleiste (1) hergestellt wird.

41. Verfahren nach Anspruch 40, wobei das zumindest eine Rückhalteglied (61) und/oder das zumindest eine Dichtglied (83) mit der Auflage (5) koextrudiert wird.

## Revendications

1. Profilé souple (1) comprenant un élément allongé thermoplastique (3) et une partie de recouvrement (5), dans lequel une pluralité d'ouvertures, ou évidements, (21) sont réalisés dans ledit élément allongé (3), et dans lequel la partie de recouvrement (5) couvre au moins partiellement lesdites ouvertures, ou évidements, (21),
**caractérisé en ce que** l'espace qui sépare les ouvertures, ou évidements, (21) varie sur la longueur de l'élément allongé (3).

2. Profilé souple (1) selon la revendication 1, dans lequel le profilé souple (1) est un profilé de bordure ou un dispositif de maintien.

3. Profilé souple (1) selon la revendication 1 ou 2, dans lequel l'élément allongé (3) comprend une première paroi latérale (13) et une seconde paroi latérale (15).

4. Profilé souple (1) selon la revendication 3, dans lequel les ouvertures, ou évidements, (21) sont réalisés dans la première paroi latérale (13).

5. Profilé souple (1) selon la revendication 3 ou 4, dans lequel les ouvertures, ou évidements, (24) sont réalisés dans la seconde paroi latérale (15).

6. Profilé souple (1) selon la revendication 3, dans lequel au moins l'une des ouvertures, ou évidements, (21, 24) est réalisé dans chacune desdites première (13) et seconde (15) parois latérales, et dans lequel la ou chaque ouverture, ou évidement, (21) réalisé dans la première paroi latérale (13) est décalé de la ou de chaque ouverture, ou évidement, (24) réalisé dans la seconde paroi latérale (15).

7. Profilé souple (1) selon l'une quelconque des revendications 3 à 6, dans lequel l'élément allongé (3) comprend en outre un rebord réalisé sur un bord libre (18) desdites première et/ou seconde parois latérales (13, 15).

8. Profilé souple (1) selon l'une quelconque des revendications 4 à 7, dans lequel les ouvertures (21) forment un ou plusieurs créneaux dans la/les parois latérales (13, 15).

9. Profilé souple (1) selon l'une quelconque des revendications 3 à 8, dans lequel l'élément allongé (3) comprend en outre une partie (11) d'épaulement entre lesdites première (13) et seconde (15) parois latérales.

10. Profilé souple (1) selon la revendication 9, dans lequel au moins une partie des ouvertures, ou évidements, (21) est formée dans la partie (11) d'épaulement de l'élément allongé (3).

11. Profilé souple (1) selon la revendication 10, dans lequel les ouvertures, ou évidements, (21) s'étendent sensiblement transversalement à ladite partie (11) d'épaulement.

12. Profilé souple (1) selon la revendication 9, 10 ou 11, dans lequel la première paroi latérale (13), la seconde paroi latérale (15) et la partie (11) d'épaulement définissent, en coupe transversale, une forme de U ou une forme de J.

13. Profilé souple (1) selon l'une quelconque des revendications précédentes, dans lequel la partie de recouvrement (5) est un matériau thermoplastique.

14. Profilé souple (1) selon l'une quelconque des revendications précédentes, dans lequel l'élément allongé (3) est formé par un traitement d'extrusion.

15. Profilé souple (1) selon l'une quelconque des revendications précédentes, dans lequel la partie de recouvrement (5) est extrudée sur ledit élément allongé (3).

16. Profilé souple (1) selon l'une quelconque des revendications 1 à 14, dans lequel la partie de recouvrement (5) est une bande ou un matériau sous forme de feuille.

17. Profilé souple (1) selon la revendication 16, dans lequel la partie de recouvrement (5) comporte une surface extérieure floquée.

18. Profilé souple (1) selon l'une quelconque des revendications précédentes, dans lequel l'espace qui sépare les ouvertures, ou évidements, (21) est réduit dans une section longitudinale de l'élément allongé (3) pour fournir une souplesse augmentée le long de cette section.

19. Profilé souple (1) selon l'une quelconque des revendications précédentes, dans lequel l'élément allongé (3) comprend une pluralité d'ouvertures, ou évidements, (21) ayant une taille sensiblement uniforme.

20. Profilé souple (1) selon l'une quelconque des revendications 1 à 18, dans lequel l'élément allongé (3) comprend une pluralité d'ouvertures, ou évidements, (21), la taille des ouvertures, ou évidements, (21) allant en augmentant dans une section longitudinale de l'élément allongé (3) pour fournir une souplesse augmentée le long de cette section.

21. Profilé souple (1) selon l'une quelconque des revendications précédentes, comprenant en outre au moins un élément (83) d'étanchéité.

22. Profilé souple (1) selon la revendication 21, dans lequel le ou chaque élément (83) d'étanchéité a une section transversale en forme de O.

23. Profilé souple (1) selon la revendication 21 ou 22, dans lequel l'élément (83) d'étanchéité est formé d'un seul tenant avec la partie de recouvrement (5).

24. Profilé souple (1) selon l'une quelconque des revendications précédentes, comportant un tissu, ou habillage, qui lui est assujetti.

25. Profilé souple (1) selon la revendication 24, dans lequel le tissu, ou habillage, est une partie de garnissage de siège de voiture.

26. Profilé souple (1) selon l'une quelconque des revendications précédentes, comprenant en outre au moins un élément (61) de maintien.

27. Profilé souple (1) selon la revendication 26, dans lequel le ou chaque élément (61) de maintien est formé à partir d'un matériau souple.

28. Profilé souple (1) selon la revendication 26 ou 27, dans lequel l'élément (61) de maintien est formé d'un seul tenant avec l'élément allongé (3).

29. Procédé pour former un profilé souple (1) selon l'une quelconque des revendications 1 à 28, le procédé comprenant les étapes suivantes, dans lesquelles :
(a) on forme un élément allongé thermoplastique (3) comportant une pluralité d'ouvertures, ou évidements, (21) réalisés dans celui-ci ; et
(b) on dispose une partie de recouvrement (5) sur ledit élément allongé (3) pour couvrir au moins partiellement lesdites ouvertures, ou évidements, (21),
**caractérisé en ce que** l'espace qui sépare les ouvertures, ou évidements, (21) varie sur la longueur de l'élément allongé (3).

30. Procédé selon la revendication 29, dans lequel l'élément allongé (3) est formé par un traitement d'extrusion.

31. Procédé selon la revendication 29 ou 30, dans lequel lesdites ouvertures, ou évidements, (21) sont formés dans l'élément allongé (3) par un poinçon lors d'un traitement de frappe.

32. Procédé selon la revendication 31, dans lequel ledit poinçon est déplacé dans une direction axiale conjointement avec l'élément allongé (3) pendant ledit traitement de frappe.

33. Procédé selon la revendication 31 ou 32, dans lequel au moins une partie dudit élément allongé (3) est supportée par une matrice pendant ledit traitement de frappe.

34. Procédé selon la revendication 33, dans lequel ladite matrice est déplacée dans une direction axiale conjointement avec ledit élément allongé (3) pendant ledit traitement de frappe.

35. Procédé selon la revendication 33, dans lequel ledit élément allongé (3) est formé avec une première paroi latérale (13) et une seconde paroi latérale (15), et dans lequel ladite matrice est disposée entre lesdites première (13) et seconde (15) parois latérales pendant ledit traitement de frappe.

36. Procédé selon l'une quelconque des revendications 29 à 34, dans lequel ledit élément allongé (3) est formé avec une partie formant une première paroi latérale (13) et avec une partie formant une seconde paroi latérale (15), et ledit procédé comprend en outre le décalage, l'une par rapport à l'autre, desdites parties formant les première et seconde parois latérales à la suite de la formation desdites ouvertures, ou évidements, (21) dans l'élément allongé (3).

37. Procédé selon la revendication 36, comprenant en outre l'étape d'application d'une chaleur audit élément allongé (3) et de décalage, l'une par rapport à l'autre, des parties formant les première (13) et seconde (15) parois latérales.

38. Procédé selon l'une quelconque des revendications 29 à 37, dans lequel ladite partie de recouvrement (5) est réalisée par un traitement d'extrusion.

39. Procédé selon l'une quelconque des revendications 29 à 38, comprenant en outre l'étape de formation d'au moins un élément (61) de maintien et/ou d'au moins un élément (83) d'étanchéité.

40. Procédé selon la revendication 39, dans lequel l'au moins un élément (61) de maintien et/ou l'au moins un élément (83) d'étanchéité sont/est formé(s) d'un seul tenant avec le profilé souple (1).

41. Procédé selon la revendication 40, dans lequel l'au moins un élément (61) de maintien et/ou l'au moins un élément (83) d'étanchéité sont/est extrudé(s) conjointement avec la partie de recouvrement (5).
